# FASCICULE DE BREVET EUROPEEN

(11) **EP 0 445 841 B1**
(45) Date de publication et mention de la délivrance du brevet: **30.11.1994**
(21) Numéro de dépôt: 91104403.0
(22) Date de dépôt: 09.02.1988
(51) Int. Cl.: B62M 17/00, B62K 21/00, B62K 25/24

(54) **Motocyclette à roue avant motrice et directrice avec jambe de force**
Motorrad mit Vorderradantrieb und Lenkung mit Drehstab
Motorcycle with frontwheeldrive and steering with torque-rod

(30) Priorité: 09.02.1987 FR 8701675; 04.03.1987 FR 8703018; 12.11.1987 FR 8715818
(43) Date de publication de la demande: 11.09.1991
(62) Demande divisionnaire de: 88901853.7
(73) Titulaire: SAVARD, Franck Jean, F-22000 St. Brieuc (FR); Savard, Patrick André, F-22370 Pleneuf (FR)
(72) Inventeur: SAVARD, Franck Jean, F-22000 St. Brieuc (FR); Savard, Patrick André, F-22370 Pleneuf (FR)
(74) Mandataire: Polus, Camille

(56) Documents cités:
- FR-A- 2 418 742
- FR-A- 2 447 849
- FR-A- 2 556 305
- FR-A- 2 579 950
- GB-A- 2 121 364
- US-A- 3 268 025

## Description

La présente invention a pour objet une motocyclette à roue avant motrice et directrice, avec jambe de force.

On connaît déjà des motocyclettes notamment du type à deux roues dont les roues avant et arrière sont motrices. Ces motocyclettes comportent un moteur portant un cadre et deux bras oscillants doubles supportant les roues avant et arrière. Généralement, un dispositif amortisseur est disposé entre le moteur et chacun des bras oscillants de façon à amortir les déplacements de chacune des roues par rapport au cadre et au moteur.

Les solutions apportées quant à la transmission vers les roues sont basées sur le principe d'un arbre muni de deux articulations à la cardan, l'une d'entre elles étant en prise directe sur l'arbre de sortie moteur et l'autre entraînant le moyeu mobile de la roue. Il s'est avéré que cette solution n'est pas fiable dans le temps car les articulations à la cardan sont soumises à un grand nombre de mouvements dans des plans différents dûs au fait que la roue avant notamment, en plus d'être entraînée en rotation, est directrice, et que de plus, il est nécessaire d'ajouter un renvoi d'angle. On comprend par ailleurs que le fait de surdimensionner ces différentes pièces est préjudiciable à la maniabilité de la motocyclette par accroissement du poids. Enfin il se trouve que la conduite d'une motocyclette à deux roues motrices est délicate et qu'il convient dans certains cas de pouvoir débrayer l'entraînement de la roue avant notamment lors du freinage car les deux roues étant entraînées par un arbre moteur commun, le blocage de la roue arrière provoque le blocage de la roue avant. Un blocage de la roue avant est très difficilement contrôlable et les risques de chute sont importants. De même dans certains cas particuliers, sur une surface type bitume il est préférable de réserver toute la puissance du moteur pour la seule roue arrière et éviter des pertes de transmission sur la roue avant, et il est là encore utile de pouvoir débrayer la motricité de cette roue avant.

On connaît la demande de brevet français FR-A-2 579 950 qui décrit une motocyclette dont la roue avant est motrice et directrice. La transmission est réalisée à partir d'arbres et de pignons droits coniques et à surface courbe, le centre de l'arc de courbe étant coaxial avec l'axe de direction.

Il n'est prévu aucun moyen pour débrayer l'entraînement de la roue avant.

Le mécanisme est d'une grande complexité avec des pertes de rendement importantes et ne présente pas une fiabilité de fonctionnement que ce soit sur route ou en terrain naturel car les pignons travaillent à sec sans possibilité de mise sous carter.

La présente invention a pour objet une motocyclette qui pallie les inconvénients que présentent les véhicules de l'art antérieur tout en proposant des dispositifs destinés à résoudre les problèmes présentés ci-dessus.

A cet effet, la motocyclette selon l'invention a deux roues motrices avant et arrière comporte un bâti rigide formant cadre et supportant un ensemble de direction, comprenant au moins une fourche, un moteur d'entraînement et des moyens d'amortissement de la fourche (voir FR-A-2 579 950) et se caractérise en ce qu'une transmission comprenant un arbre disposé entre cette fourche de la roue avant et le moteur d'entraînement de façon que l'arbre constitue une jambe de force.

Selon une caractéristique particulière de l'invention les moyens d'amortissement peuvent comprendre un bras oscillant avant, articulé de façon à former un quadrilatère déformable avec l'arbre de la transmission formant jambe de force.

De plus, l'arbre d'entraînement peut avoir ses extrémités reliées respectivement au moteur d'entraînement et à un boîtier relais d'entraînement de la roue avant par des liaisons à la cardan.

Ce boîtier relais est porté par la fourche de l'ensemble de direction.

Selon une caractéristique particulière d'un mode de réalisation le boîtier relais comprend un carter muni de deux paliers dans lesquels tournent les axes de deux pignons coniques dont l'un est mené par l'arbre d'entraînement et l'autre est menant, directement entraîné par la transmission, le carter étant monté à rotation par rapport à la fourche grâce à un roulement à billes. Selon ce mode de réalisation l'axe du pignon mené est solidaire d'une articulation à la cardan relié à l'axe d'un pignon moteur qui coopère avec une chaîne pour entraîner une couronne dentée solidaire d'un moyeu solidaire mobile de la roue avant.

L'axe du pignon moteur tourne dans un pallier solidaire de la fourche.

Selon une autre caractéristique de l'invention l'arbre d'entraînement peut comprendre des moyens de réglage en longueur de façon à permettre le réglage de l'angle de chasse.

La transmission de la motocyclette selon l'invention peut comprendre un dispositif de débrayage interposé entre l'entraînement et le moyeu extérieur mobile de la roue avant motrice. Ce dispositif de débrayage est notamment constitué d'un pignon solidaire en rotation d'un arbre entre une position d'entraînement dans laquelle le pignon coopère avec une roue dentée montée libre sur ledit arbre et une position débrayée dans laquelle le pignon est écarté de ladite couronne.

L'invention sera mieux comprise à la lecture de la description détaillée qui va suivre de différents modes de réalisation selon l'invention, ceci en regard des figures annexées parmi lesquelles :
- la figure 1 représente une vue latérale d'une motocyclette comportant une transmission destinée à l'entraînement de la roue directrice selon l'invention,
- la figure 2 représente une coupe selon la ligne 2-2 de la figure 1, et
- la figure 3 représente une vue schématique d'un dispositif de débrayage de l'entraînement d'une roue directrice selon l'invention.

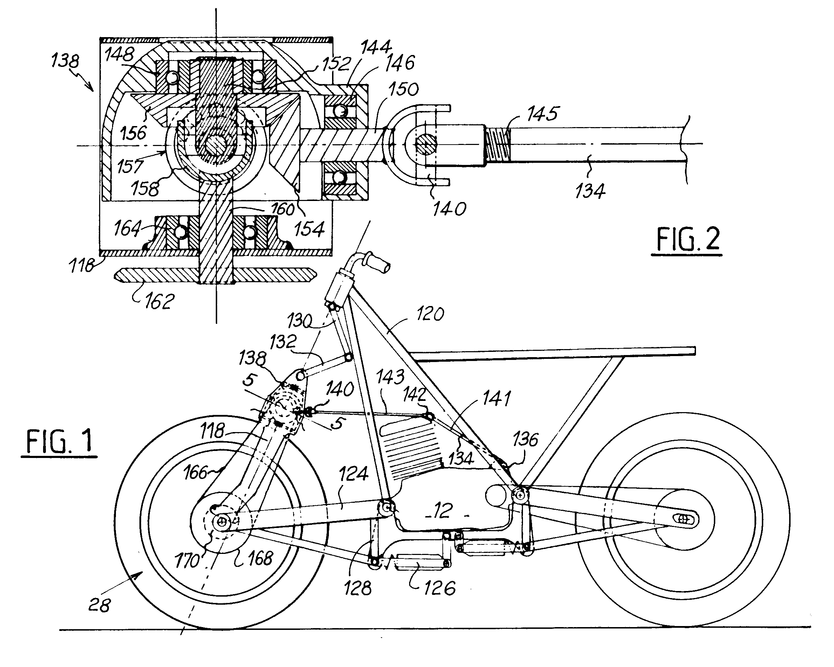

Sur la figure 1, on a représenté une motocyclette à deux roues motrices et plus particulièrement la transmission à la roue avant directrice. La suspension de cette roue est constituée d'un bras oscillant 124 reliant le moyeu 170 de la roue au bloc moteur 12, ce bras oscillant étant amorti dans ses déplacements par un dispositif amortisseur 126 situé entre ce même moteur et le bras oscillant par l'intermédiaire d'une tringlerie adéquate 128. La direction est constituée d'une fourche 118, solidaire du moyeu et possédant un angle de chasse donné, reliée à la partie supérieure du cadre 120 par un ensemble de deux compas articulés 130 et 132. L'arbre moteur 136 du moteur d'entraînement 122 est relié au boîtier relais 138 par une transmission 134. Les différentes articulations 136 et 140 de cette transmission 134 sont du type à la cardan et on peut prévoir une liaison intermédiaire 142, également à la cardan de façon à pouvoir contourner le bloc moteur, guidée en rotation sur ce dernier, la liaison 142 reliant deux arbres 141 et 143.

Le boîtier relais 138 est détaillé à la figure 2 sur laquelle on a représenté les triangles de la fourche de direction 118 situés de part et d'autre de la roue avant directrice.

Un carter 144 reçoit deux paliers 146 et 148, orientés perpendiculairement de façon à supporter les axes 150 et 152 de deux pignons coniques 154, 156.

L'axe 150 du pignon 154 est entraîné par l'articulation à la cardan 140 de la transmission 134. Le carter 144 est fixe par rapport au cadre et mobile par rapport a la fourche de direction 118 grâce aux roulements 157, disposés aux parties supérieure et inférieure du carter.

L'axe 152 entraîne une articulation à la cardan 158 elle-même reliée à l'axe 160 d'un pignon 162. L'axe 160 tourne dans un palier 164 porté par les triangles de la fourche de direction 118. Le pignon 162 entraîne une chaîne 166 elle-même coopérant avec une couronne dentée 168 solidaire du moyeu extérieur mobile 170 de la roue directrice.

Un avantage de ce type de transmission est de permettre l'utilisation d'un arbre 143 réglable en longueur par un filetage 145. Ainsi, l'arbre 143 joue le rôle de transmission et de jambe de force pour faire varier l'angle de chasse.

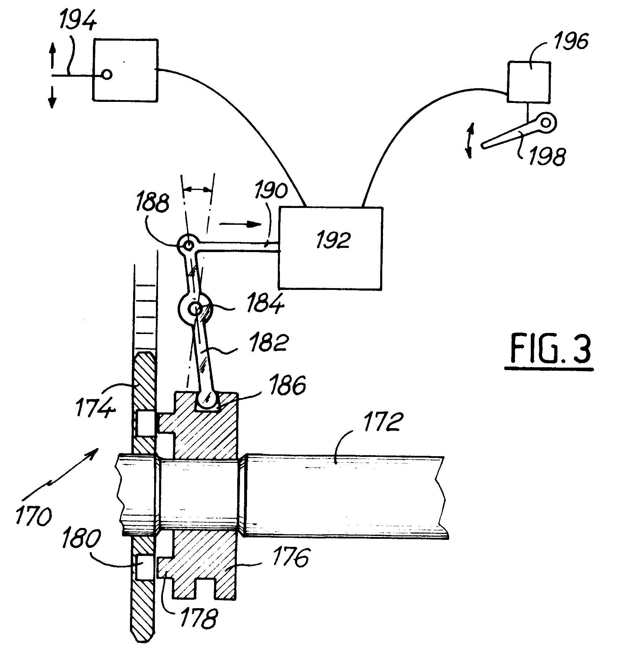

A la figure 3 on a représenté un dispositif de débrayage 170 de l'entraînement d'une roue motrice et plus particulièrement le débrayage d'une roue avant directrice de motocyclette à deux roues motrices.

Le moyeu est schématisé en 172 par un arbre sur lequel est montée libre une couronne dentée 174 tandis qu'un pignon 176 solidaire de l'arbre 172 est muni de pions d'entraînement 178 destinés à coopérer avec des alésages 180 ménagés dans la couronne dentée 174. Un levier 182 pivotant autour de l'axe 184 est en prise avec le pignon 176, son extrémité coopérant avec la rainure 186. L'autre extrémité 188 de ce même levier est articulée sur la tige de manoeuvre 190 d'un actionneur 192 qui confère à sa tige de manoeuvre 190 deux positions de façon que les pions 178 du pignon 176 puissent prendre deux positions : entraînement et débrayage. Cet actionneur 192 est commandé par deux dispositifs, l'un constitué d'une commande manuelle 194, située par exemple sur le guidon, et un autre dispositif de commande 196 piloté par les mouvements de la pédale de frein arrière 198.

Ainsi, le fonctionnement de ce dispositif se déroule de la façon suivante :
- lorsque l'utilisateur souhaite débrayer l'entraînement de la roue avant il actionne la commande manuelle 194 qui elle-même commande l'actionneur dont la tige 190 sort, ce qui pousse l'extrémité 188 du levier 182 provoquant ainsi le déplacement relatif du pignon 176 et le retrait des pions 78 des alésages 180 de la couronne 174.

A l'inverse, en position neutre, l'actionneur rappelle la tige 190 ce qui a pour effet de déplacer le pignon fou 176 vers la couronne 174 et d'introduire les pions 178 dans les alésages 180, dès que ceux-ci se trouvent en coïncidence par la rotation relative de la couronne par rapport au pignon.

La commande simultanée par la pédale arrière permet de débrayer l'entraînement de la roue avant dès que la roue arrière est freinée ce qui évite en cas de blocage de la roue arrière un blocage simultané de la roue avant.

## Revendications

1. Motocyclette à deux roues motrices avant et arrière comportant un bâti rigide formant cadre (120) supportant un ensemble de direction (130, 132) comprenant au moins une fourche (118), un moteur d'entraînement (12) et des moyens d'amortissement de ladite fourche, caractérisé en ce qu'une transmission (134) comprenant un arbre (143) est disposée entre la fourche (118) de la roue avant et le moteur d'entraînement (12) de façon que l'arbre constitue une jambe de force.

2. Motocyclette selon la revendication 1, caractérisée en ce que les moyens d'amortissement comprennent un bras oscillant avant (124), articulé de façon à constituer un quadrilatère déformable avec l'arbre (143) de la transmission (134) formant jambe de force.

3. Motocyclette selon la revendication 1 ou 2, caractérisée en ce que l'arbre d'entraînement (143) a ses extrémités reliées respectivement au moteur d'entraînement (12) et à un boîtier relais (138) d'entraînement de la roue avant (28) par des liaisons à la cardan (136, 140).

4. Motocyclette selon l'une quelconque des revendications précédentes, caractérisée en ce que le boîtier relais (138) est porté par la fourche (118) de l'ensemble de direction (130, 132).

5. Motocyclette selon l'une quelconque des revendications précédentes, caractérisée en ce que le boîtier relais (138) comprend un carter (144) muni de deux paliers (146, 148) dans lesquels tournent les axes (150, 152) de deux pignons coniques dont l'un (156) est mené par l'arbre d'entraînement (143) et l'autre (154) est menant, directement entraîné par la transmission (134), le carter (144) étant monté à rotation par rapport à la fourche (118) grâce à un roulement à billes (157).

6. Motocyclette selon l'une quelconque des revendications précédentes, caractérisée en ce que l'axe (152) du pignon mené (156) est solidaire d'une articulation à la cardan (158) reliée à l'axe (160) d'un pignon moteur (162) qui coopère avec une chaîne (166) pour entraîner une couronne dentée (168) solidaire d'un moyeu extérieur mobile (170) de la roue avant (28).

7. Motocyclette selon l'une quelconque des revendications précédentes, caractérisée en ce que l'axe (160) du pignon moteur (162) tourne dans un palier (164) solidaire de la fourche.

8. Motocyclette selon l'une quelconque des revendications précédentes, caractérisée en ce que l'arbre d'entraînement (143) comprend des moyens (145) de réglage en longueur de façon à permettre le réglage de l'angle de chasse.

9. Motocyclette selon l'une quelconque des revendications précédentes, caractérisée en ce que la transmission (134) comprend un dispositif de débrayage (170) interposé entre l'entraînement et le moyeu extérieur mobile de la roue avant motrice (28).

10. Motocyclette selon l'une quelconque des revendications précédentes, caractérisée en ce que le dispositif de débrayage (170) est constitué d'un pignon (176) solidaire en rotation d'un arbre (172) et déplaçable entre une position d'entraînement dans laquelle le pignon coopère avec une roue dentée (174) montée libre sur ledit arbre et une position débrayée dans laquelle le pignon (176) est écarté de ladite couronne.

## Claims

1. Motorcycle with a front and a rear driving wheel, including a rigid structure forming a frame (120) supporting a steering assembly (130, 132) comprising at least one fork (118), a driving engine (12) and dampening means for the said fork, characterised in that a transmission (134) comprising a shaft (143) is disposed between the fork (118) or the front wheel and the driving engine (12) so that the shaft forms a torque rod.

2. Motorcycle according to claim 1, characterised in that the dampening means comprise a front swinging arm (124) hinged so as to form a deformable quadrilateral with the shaft (143) of the transmission (134) forming a torque rod.

3. Motorcycle according to claim 1 or claim 2, characterised in that the ends of the drive shaft (143) are connected respectively to the driving engine (12) and to a drive relay unit (138) for the front wheel (28) by means of universal joints (136, 140).

4. Motorcycle according to any one of the preceding claims, characterised in that the relay unit (138) is carried by the fork (118) of the steering assembly (130, 132).

5. Motorcycle according to any one of the preceding claims, characterised in that the relay unit (138) comprises a housing (144) provided with two bearings (146, 148) in which the shafts (150, 152) of two conical pinions rotate, one of which (156) is driven by the drive shaft (143) and the other of which (154) is a driving pinion driven directly by the transmission (134), the housing (144) being mounted to rotate relative to the fork (118) by virtue of a ball bearing (157).

6. Motorcycle according to any one of the preceding claims, characterised in that the shaft (152) of the driven pinion (156) is integral with a universal joint (158) connected to than shaft (160) of a driving pinion (162) which cooperates with a chain (166) in order to drive a ring gear (168) integral with a movable outer hub (170) of the front wheel (28).

7. Motorcycle according to any one of the preceding claims, characterised in that the shaft (160) of the driving pinion (162) rotates in a bearing (164) integral with the fork.

8. Motorcycle according to any one of the preceding claims, characterised in that the drive shaft (143) comprises longitudinal adjustment means (145) for adjusting the castor angle.

9. Motorcycle according to any one of the preceding claims, characterised in that the transmission (134) comprises a clutch device (170) interposed between the drive and the movable outer hub of the front driving wheel (28).

10. Motorcycle according to any one of the preceding claims, characterised in that the clutch device (170) consists of a pinion (176) integral in rotation with a shaft (172) and moving between a drive position in which the pinion cooperates with a gear (174) freely mounted on the said shaft and a clutch psition in which the pinion (176) is moved away from the said ring gear.

## Patentansprüche

1. Motorrad mit zwei, vorderen und hinteren, Antriebsrädern, mit einem den Rahmen (120) bildenden starren Gestell, das eine Lenkungseinheit (130,132) mit wenigstens einer Gabel (118), einen Antriebsmotor (12) und Dämpfungsmittel für die Gabel trägt, dadurch **gekennzeichnet**, daß eine eine Welle (143) aufweisende Kraftübertragung (134) so zwischen der Gabel (118) des Vorderrades und dem Antriebsmotor (12) angeordnet ist, daß die Welle eine Strebe bildet.

2. Motorrad nach Anspruch 1, dadurch **gekennzeichnet**, daß die Dämpfungsmittel einen vorderen Lenker (124) aufweisen, der derart gelenkig befestigt ist, daß er mit der die Strebe bildenden Welle (143) der Kraftübertragung (134) ein verformbares Viereck bildet.

3. Motorrad nach Anspruch 1 oder 2, dadurch **gekennzeichnet**, daß die Antriebswelle (143) mit ihren Enden durch Kardangelenke (136,140) mit dem Antriebsmotor (12) bzw. einem Zwischengetriebe (138) für den Antrieb des Vorderrades (28) verbunden ist.

4. Motorrad nach einem der vorstehenden Ansprüche, dadurch **gekennzeichnet**, daß das Zwischengetriebe (138) durch die Gabel (118) der Lenkungseinheit (130,132) gehalten ist.

5. Motorrad nach einem der vorstehenden Ansprüche, dadurch **gekennzeichnet**, daß das Zwischengetriebe (138) ein Gehäuse (144) aufweist, das mit zwei Lagern (146, 148) verstehen ist, in denen die Achsen (150, 152) von zwei Kegel-Ritzeln laufen, von denen das eine (156) durch die Antriebswelle (143) getrieben ist und das andere (154) treibend ist, direkt angetrieben durch die Kraftübertragung (134), wobei das Gehäuse (144) mit Hilfe eines Kugellagers (157) in bezug auf die Gabel (118) drehbar montiert ist.

6. Motorrad nach einem der vorstehenden Ansprüche, dadurch **gekennzeichnet**, daß die Achse (152) des getriebenen Ritzels (156) mit einem Kardangelenk (158) verbunden ist, das mit der Achse (160) eines Antriebsritzels (162) verbunden ist, das mit einer Kette (166) zusammenwirkt, um einen Zahnkranz (168) anzutreiben, der mit einer beweglichen äußeren Nabe (170) des Vorderrades (28) verbunden ist.

7. Motorrad nach einem der vorstehenden Ansprüche, dadurch **gekennzeichnet,** daß die Achse (160) des Antriebsritzels (162) in einem an der Gabel sitzenden Lager (164) läuft.

8. Motorrad nach einem der vorstehenden Ansprüche, dadurch **gekennzeichnet**, daß die Antriebswelle (143) Mittel (145) zur Längenverstellung aufweist, derart, daß die Einstellung des Nachlaufwinkels ermöglicht wird.

9. Motorrad nach einem der vorstehenden Ansprüche, dadurch **gekennzeichnet**, daß die Kraftübertragung (134) eine Auskupplungseinrichtung (170) aufweist, die zwischen dem Antrieb und der äußeren beweglichen Nabe des vorderen Antriebsrades (28) eingefügt ist.

10. Motorrad nach einem der vorstehenden Ansprüche. dadurch **gekennzeichnet**, daß die Auskupplungseinrichtung (170) durch ein Ritzel (176) gebildet wird, das drehfest mit einer Welle (172) verbunden und zwischen einer Antriebsposition, in der das Ritzel mit einem frei auf der genannten Welle montierten Zahnrad (174) zusammenwirkt, und einer ausgekuppelten Position, in der das Ritzel (176) von diesem Zahnrad abgerückt ist, verstellbar ist.
